Europäisches Patentamt

European Patent Office

Office européen des brevets

(19)

(11) Veröffentlichungsnummer: **0 353 455**
**A2**

(12) # EUROPÄISCHE PATENTANMELDUNG

(21) Anmeldenummer: 89111614.7

(22) Anmeldetag: 26.06.89

(51) Int. Cl.4: **G11B 5/596**

(30) Priorität: 07.07.88 DE 3823103

(43) Veröffentlichungstag der Anmeldung:
**07.02.90 Patentblatt 90/06**

(84) Benannte Vertragsstaaten:
**AT CH DE FR GB IT LI NL SE**

(71) Anmelder: **Siemens Aktiengesellschaft**
**Wittelsbacherplatz 2**
**D-8000 München 2(DE)**

(72) Erfinder: **Diepers, Heinrich, Dr.**
**Veit-Stoss-Strasse 44**
**D-8552 Höchstadt(DE)**

(54) **Datenspeichereinrichtung mit mindestens einer Speicherplatte und einer Servoplatte sowie Verfahren zum Betrieb der Einrichtung.**

(57) Die Datenspeichereinrichtung enthält mindestens eine Speicherplatte, eine Servoplatte und eine Positioniervorrichtung mit einer Positionierelektronik zur Führung eines an einem Positionierarm befestigten Schreib-/Lese-Magnetkopfes. Bei dieser Datenspeichereinrichtung sollen auftretende Abweichungen von den Sollpositionen ihrer Platten korrigierbar sein. Hierzu ist vorgesehen, daß mindestens eine zusätzliche Justierspur (38) in die Speicherplatte (9) eingeschrieben ist, daß ein den Magnetkopf (19) tragendes vorderes Armstück (34) des entsprechenden Positionierarmes (27) an einem einstellbaren Verbindungsglied (33) befestigt ist, mittels dessen der Magnetkopf aus seiner durch eine zugeordnete Servospur festgelegten Sollage in Abhängigkeit von der detektierten und abgespeicherten relativen Lage der Justierspur (38) auf der Speicherplatte (9) zu einer entsprechenden Servospur auf der Servoplatte auslenkbar ist.

FIG 2

EP 0 353 455 A2

## Datenspeichereinrichtung mit mindestens einer Speicherplatte und einer Servoplatte sowie Verfahren zum Betrieb der Einrichtung

Die Erfindung bezieht sich auf eine Datenspeichereinrichtung mit
- mindestens einer magnetisierbaren Speicherplatte mit Datenspuren,
- einer mit der Speicherplatte starr verbundenen Servoplatte mit den Datenspuren zugeordneten Servospuren und
- einer Positioniervorrichtung mit einer Positionierelektronik zur Führung eines an einem Positionierarm befestigten Servokopfes längs der Servospuren und mindestens eines an einem Positionierarm befestigten Schreib-/Lese-Magnetkopfes längs der Datenspuren in Abhängigkeit von den jeweils zugeordneten Servospuren.
Die Erfindung betrifft ferner ein Verfahren zum Betrieb dieser Einrichtung.

Entsprechende Datenspeichereinrichtungen sind allgemein bekannt (vgl. z.B. Prospekt der Firma K + S-Unternehmensberatung mit dem Titel: "Die technologische Führung in der HIGH TECH-Peripherie - Subsystem MegaFile" oder das Buch von W.Söll und J.-H.Kirchner: "Digitale Speicher", Würzburg 1978, Seiten 96 bis 101).

Eine hochdichte Speicherung von Informationen (Daten) in plattenförmigen Aufzeichnungsmedien (Speicherplatten) kann sowohl nach dem Prinzip einer longitudinalen (horizontalen) als auch insbesondere nach dem Prinzip einer senkrechten (verti kalen) Magnetisierung erfolgen (vgl. z.B. "IEEE Transactions on Magnetics", Vol. MAG-16, No. 1, Jan. 1980, Seiten 71 bis 76 oder Vol. MAG-20, No. 5, Sept. 1984, Seiten 657 bis 662 und 675 bis 680). Die für diese Magnetisierungsarten zu verwendenden Schreib-/Lese-Magnetköpfe werden dabei vorteilhaft in Dünnfilmtechnik auf nicht-magnetischen Substraten ausgebildet. Dabei sollte der Abstand zwischen einem derartigen Magnetkopf und der Oberfläche der Speicherplatte äußerst klein gehalten werden können und insbesondere im Fall einer senkrechten Magnetisierungsart unter 1 $\mu$m liegen. Derartig geringe Abstände lassen sich aber praktisch nur dadurch gewährleisten, daß man das den Magnetkopf tragende Substrat als Flugkörper gestaltet, der aerodynamische über der sich unter ihm drehenden Speicherplatte hinwegfliegt. Hierzu wird vorteilhaft das Substrat auf seiner dem Aufzeichnungsmedium zugewandten Unterseite mit entsprechenden Gleit- bzw. Flugkufen ausgestattet (vgl. z.B. EP-A-0 137 051).

Entsprechende bekannte Datenspeichersysteme, wie sie z.B. in den eingangs erwähnten Veröffentlichungen angedeutet sind, enthalten im allgemeinen einen Stapel von mehreren, untereinander starr verbundenen Speicherplatten. Diese Platten werden mittels ihnen zugeordneten Magnetköpfen beschrieben bzw. ausgelesen. Hierzu werden alle Magnetköpfe gleichzeitig bewegt, da zwischen ihnen ebenfalls eine starre Verbindung besteht. Sie sind nämlich an den vorderen Enden von Positionierarmen befestigt, die Teil einer gemeinsamen Positioniervorrichtung sind. Die Führung der Magnetköpfe längs der Datenspuren erfolgt mittels eines besonderen Servosystems und einer Positionierelektronik der Positioniervorrichtung. Ein entsprechendes Servosystem ist z.B. unter der Bezeichnung "Dedicated Servo" bekannt. Bei diesem System wird einer der Magnetköpfe als sogenannter Servokopf verwendet. Er bewegt sich über einer der Speicherplatten, die als Servoplatte dient und fest vorgege bene, nicht überschreibbare Daten- bzw. Servospuren enthält. Entsprechend der starren Verbindung zwischen den Schreib-/Lese-Köpfen (Datenköpfen) und dem Servokopf legen dann diese Servospuren bei einem aktuellen Schreibvorgang eines Datenkopfes entsprechende Datenspuren auf der Oberfläche der entsprechenden Speicherplatte fest. Ein Wiederauffinden geschriebener Datenspuren erfolgt ausschließlich über Anfahren der entsprechenden Servospur mit Hilfe der Positionierelektronik. Gleiches gilt auch für das Halten des Datenkopfes auf der Spur während eines Schreib- oder Lesevorganges.

Das bekannte Servosystem erlaubt eine Spurverfolgungsgenauigkeit von z.B. ± 1,5 $\mu$m. Dieser Wert ist durch die mechanisches Toleranzen des Antriebssystems für die Speicher- und Servoplatte, durch die Präzision der Elektromechanik für den Kopfpositionierer sowie durch die entsprechende Regelungstechnik der Positionierelektronik bestimmt. Schwierigkeiten können sich jedoch dann ergeben, wenn Abweichungen in der Justierung der einzelnen Komponenten zueinander auftreten. Derartige Abweichungen können z.B. durch mechanische Überbeanspruchung (Stoß), Spannungsrelaxationen, thermische Dehnungen mit eventuell bleibender Verformung oder auch einfach durch Verschleiß oder Ermüdung verursacht werden. So würde z.B. ein Auslenken der Servoachse an deren oberen Ende um wenige $\mu$m gegenüber der Plattenstapelachse dazu führen, daß die Spuren der Servoplatte gegenüber den Datenspuren der Speicherplatten exzentrisch verlaufen. Liegt aber die Größe dieser Exzentrizität im Bereich des Spurrasters, so ist kein fehlerfreier Schreib-/Lesebetrieb mehr möglich. Ähnliches gilt auch für den Fall, daß die Platten in einem Plattenstapel z.B. in Folge thermischer Dehnungen sich gegeneinander verschieben. In all diesen Fällen besteht keine Korrekturmöglichkeit, da die einmal bei der Fertigung oder in einem Prüffeld eingestellte mechanische Situation während des Betriebsfalles der Speichereinrichtung nicht mehr verändert werden kann.

Bei einer derart aufgebauten Datenspeichereinrichtung liegen im Prinzip drei unabhängig voneinander arbeitende mechanische Systeme vor, nämlich der Servopositionierer, der Plattenantrieb mit Antriebsachse und der Plattenstapel mit seinen einzelnen fixierten Platten. Referenzsystem zur Festlegung gegenseitiger mechanischer Position ist dabei die Servoplatte. Damit verbunden ist jedoch das Problem, daß Abweichungen irgendeiner lokalen Position gegenüber der Servoplatte nicht mehr korrigierbar sind und zum Ausfall des Gesamtsystems führen, falls bestimmte Toleranzen überschritten werden. Diese Toleranzen sind insbesondere bei angestrebten hohen Spurdichten sehr eng zu wählen.

Aufgabe der Erfindung ist somit, die Datenspeichereinrichtung der eingangs genannten Art dahingehend auszugestalten, daß im Betrieb auftretende Abweichungen von den Sollpositionen ihrer Platten zu korrigieren sind, selbst wenn diese ein Mehrfaches der vorgegebenen Toleranzwerte ausmachen.

Diese Aufgabe wird erfindungsgemäß dadurch gelöst, daß mindestens eine zusätzliche Justierspur in die Speicherplatte eingeschrieben ist, daß ein den Schreib/Lese-Magnetkopf tragendes vorderes Armstück des entsprechenden Positionierarmes an einem einstellbaren Verbindungsglied befestigt ist, mittels dessen der Magnetkopf aus seiner durch eine zugeordnete Servospur festgelegten Sollage auslenkbar ist, und daß die Positionierelektronik mit einer Nachführelektronik versehen ist, welche die Einstellung des Verbindungsgliedes in Abhängigkeit von der detektierten und abgespeicherten relativen Lage der Justierspur auf der Speicherplatte zu einer entsprechenden Servospur auf der Servoplatte bei der Führung des Magnetkopfes längs einer Datenspur steuert.

Bei der erfindungsgemäßen Datenspeichereinrichtung wird also die relative Lage zwischen Datenspur- und Servospursystem berücksichtigt. Hierzu wird mit Hilfe der besonderen Justierspur in der Speicherplatte ein Nachführsignal gewonnen, das beim Schreiben oder Lesen irgendeiner aktuellen Datenspur zur Steuerung der Auslenkung des Magnetkopfes mittels des einstellbaren Verbindungsgliedes herangezogen wird. Es lassen sich deshalb vorteilhaft mit jeder Plattenumdrehung einfache, sinusförmige oder auch in unregelmäßigen Winkelabständen auftretende Exzentrizitäten kompensieren. Damit ist gleichzeitig eine Aufweitung der bisher engen mechanischen Toleranzen möglich.

Ein vorteilhaftes Betriebsverfahren der erfindungsgemäßen Datenspeichereinrichtung ist dadurch gekennzeichnet, daß zunächst der Servokopf längs einer der Justierspur zugeordneten Referenzspur geführt wird und der Schreib-/Lese-Magnetkopf unter Ansteuerung des einstellbaren Verbindungsgliedes der Justierspur nachgeführt wird, wobei mit der Nachführelektronik ein Nachführsignal erzeugt und abgespeichert wird, und daß dieses abgespeicherte Nachführsignal später beim Schreiben oder Lesen einer Datenspur zur Ansteuerung des Verbindungsgliedes vorgesehen wird.

Vorteilhafte Ausgestaltungen der erfindungsgemäßen Datenspeichereinrichtung bzw. deren Betriebsverfahren gehen aus den Unteransprüchen hervor.

Zur weiteren Erläuterung der Erfindung wird nachfolgend auf die schematische Zeichnung Bezug genommen, in deren Figur 1 ein Schnitt durch ein Plattenlaufwerk einer Datenspeichereinrichtung veranschaulicht ist. Die Figuren 2 und 3 zeigen einen Positionierarm bzw. eine Speicherplatte für eine erfindungsgemäße Datenspeichereinrichtung. Aus den Figuren 4 bis 7 gehen verschiedene Ausführungsformen von Positionierarmen hervor. In den Figuren sind sich entsprechende Teile mit denselben Bezugszeichen versehen.

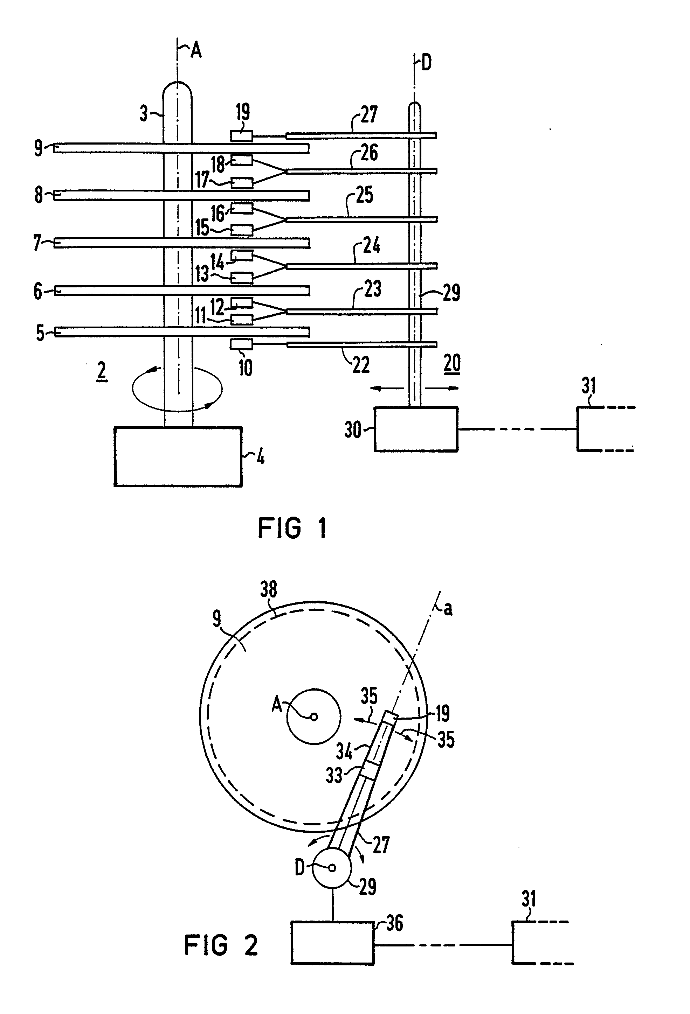

Dem in Figur 1 als Längsschnitt gezeigten Aufbau eines Plattenlaufwerkes einer Datenspeichereinrichtung ist eine bekannte Ausführungsform zugrundegelegt, wie sie z.B. in dem eingangs erwähnten Prospekt der Firma K + S angedeutet ist. Das mit 2 bezeichnete Plattenlaufwerk enthält eine Nabe 3, die um eine Achse A mittels eines Antriebs 4 rotieren kann. An der Nabe 3 sind beispielsweise fünf untereinander parallelliegende Magnetspeicherplatten 5 bis 9 starr befestigt. Jede Platte ist beispielsweise auf beiden Seiten mit einer Speicherschicht versehen. Zum Beschreiben dieser Speicherschichten mit Daten bzw. zum Auslesen der Daten ist eine entsprechende Anzahl von Magnetköpfen 10 bis 19 vorgesehen. Diese Köpfe werden mittels einer Positioniervorrichtung 20 geführt. Sie sind jeweils an der Spitze von Positionierarmen 22 bis 27 angebracht, wobei einzelne Arme auch zwei Köpfe tragen können. Die Positionierarme 22 bis 27 sind starr an einer gemeinsamen Welle 29 befestigt, die um eine Drehachse D mittels eines Stellantriebs 30 drehbar ist. Dieser Typ von Positioniervorrichtung wird deshalb auch als "Drehpositionierer" bezeichnet. Durch Verdrehen der Achse D kann demnach ein Magnetkopf jeden Speicherplatz auf einer Speicherplatte erreichen.

Der Zugriff zu einem bestimmten Speicherplatz bzw. einer bestimmten Datenspur auf einer Platte über einen entsprechenden Magnetkopf wird mit Hilfe einer besonderen Servoplatte erreicht. Als Servoplatte ist eine der Magnetspeicherplatten 5 bis 9, beispielsweise die unterste Platte 5 vorgesehen. In diese Servoplatte 5 sind fest vorgegebene, nicht überschreibbare Daten- bzw. Servospuren eingeschrieben. Eine den Stellantrieb 30 steuernde Positionierelektronik 31 sorgt dann dafür, daß zu einer bestimmten Adresse auf der Servoplatte 5 einer der Magnetköpfe 11 bis 19 an eine entsprechende Stelle auf eine der übrigen Speicherplatten 6 bis 9 geführt wird. Die für eine derartige Ansteuerung erforderliche Verschaltung der Magnetköpfe mit der Elektronik 31 ist in der Figur aus Gründen der Übersichtlichkeit nicht ausgeführt.

Um die erwähnten Schwierigkeiten aufgrund von Änderungen der relativen Lage der Servoplatte 5 gegenüber den übrigen Speicherplatten 6 bis 9 zu beheben, ist erfindungsgemäß jeder einen Datenkopf tragende Positionierarm mit einem besonderen einstellbaren Verbindungsglied ausgestattet. Für diese Glieder können vorzugsweise piezo-elektrische Elemente z.B. aus entsprechenden Keramiken verwendet werden. Diese auch als "Piezo-Aktuatoren" zu bezeichnenden Elemente ändern in einem angelegten elektrischen Feld ihre Abmessungen. Die Abmessungsänderungen lassen sich dann zur Auslenkung eines Datenkopfes aus seiner durch eine zugeordnete Servospur festgelegten Solllage heranziehen.

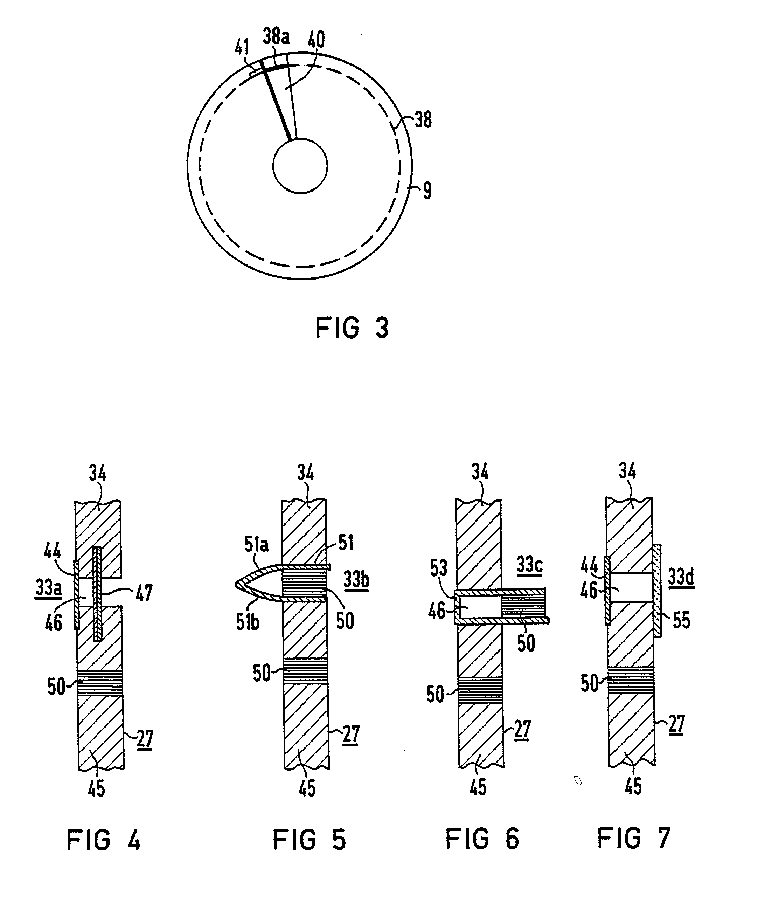

Wie aus der Aufsicht der Figur 2 hervorgeht, ist der stellvertretend für alle Positionierarme 23 bis 27 ausgewählte oberste Arm 27 durch ein derartiges Verbindungsglied 33 unterteilt. An seinem vorderen Armstück 34 befindet sich dabei der Schreib-/ Lese-Kopf 19. Wie durch gepfeilte Linien 35 angedeutet sein soll, kann mit Hilfe des einstellbaren Verbindungsgliedes 33 das Armstück 34 gegenüber der Hauptausdehnungsrichtung (Längsrichtung) a des Armes 27 abgewinkelt werden. Dies wird durch eine entsprechende Ausgestaltung des Verbindungsgliedes 33 ermöglicht, das die Funktion eines Gelenkes hat und damit den Kopf 19 in Ausdehnungsrichtung a gesehen nach rechts oder links auslenken kann. So sind z.B. Auslenkungen des Kopfes gegenüber der Richtung a je nach den vorliegenden Toleranzen oder zu erwartenden Sollpositionsabweichungen im Betrieb um Beträge von einigen μm bis einigen 100 μm einstellbar. Die Einstellung wird dabei mit einer entsprechend Nachführelektronik 36 gesteuert. Diese in der Figur nicht näher ausgeführte Elektronik ist als Teil der Positionierelektronik 31 anzusehen.

Um das gelenkartige Verbindungsglied 33 mit dieser Nachführelektronik 36 einstellen zu können, ist außerdem auf jeder Datenoberfläche mindestens eine zusätzliche Justierspur 38 vorzusehen. Die Position der einzelnen Justierspuren auf den Datenoberflächen kann prinzipiell frei gewählt werden und z.B. am inneren oder äußeren Rand des jeweiligen Datenbandes liegen. Es können auch mehrere Justierspuren auf einer Oberfläche vorgesehen werden, um so Positionierwege zu einer Justierspur zu verkürzen.

Bei einer derart ausgestalteten Datenspeichereinrichtung nach der Erfindung dient als Referenz auch bei sehr hohen Spurdichten in bekannter Weise eine Servoplatte 5 mit vorgegebenen Servospuren. Dabei werden die Grenzen in der Spurdichte nur durch die Empfindlichkeit der Positionierelektronik (31, 36) gesetzt. Ebenso bleibt die mechanische Verbindung zwischen dem servokopf 10 und den übrigen Datenköpfen 11 bis 19, wobei jedoch zusätzlich in jedem Positionierarm (23 bis 27) der Datenköpfe ein einstellbares Verbindungsglied 33 vorgesehen ist. Die relative Lage zwischen den einzelnen Datenspuren und ihren zugeordneten Servospuren wird nun dadurch detektiert, daß man den Servokopf 10 in bekannter Weise längs einer Referenzspur folgen läßt, die der Justierspur 38 auf der Speicherplatte 9 entspricht. Dabei wird der Datenkopf 19 mittels Einstellung des Verbindungsgliedes 33 exakt auf der Justierspur 38 nachgeführt.

Das dabei entstehende Nachführungssignal der Nachführelektronik 36 wird abgespeichert nach Phase und Betrag und später beim Schreiben oder Lesen irgendeiner aktuellen Datenspur jeweils wieder zur Ansteuerung des Verbindungsgliedes 33 herangezogen. Selbstverständlich sind auch für die übrigen Schreib-/Lese-Köpfe 11 bis 18 entsprechende Prozeduren erforderlich. Auf diese Weise lassen sich Abweichungen der Datenspuren von ihrer Sollposition bezüglich der ihnen zugeordneten Servospuren im Betrieb kompensieren.

Die Flexiblität einer derartigen Nachführung wird dadurch weiter erhöht, daß in Betriebspausen, d.h. nach Auftreten von Fehlern oder auch nur in Zeitabschnitten ohne Zugriff auf die Datenplatten entsprechende Justierläufe automatisch durchgeführt werden. Auf diese Weise lassen sich zwischenzeitliche Abweichungen, selbst wenn sie noch unkritisch sind, schnell korrigieren.

Das Aufbringen der einzelnen Servospuren auf die Servoplatte 5 und der Justierspuren 38 auf die Datenoberflächen der Speicherplatten 6 bis 9 kann in einem Lauf nach dem Zusammenbau des Plattenstapels oder auch an den Platten einzeln erfolgen. Im letzteren Fall ist nach dem Zusammenbau zunächst ein Justierlauf notwendig.

Die Justierspuren 38 auf den Datenoberflächen können beispielsweise als Doppelspur mit entgegengesetzt gerichteter, geeignet modulierter Magnetisierung ausgeführt werden. Der lesende Magnetkopf wird dabei zwischen beide Spuren gesetzt. Das von ihm erzeugte Signal ist dann bei Sollposition gleich "null". Eine Richtungsinformation läßt sich nach phasenrichtiger Demodulation gewinnen.

Das Auffinden einer Justierspur 38 muß auch dann sichergestellt sein, wenn eine größere Abweichung, die z.B. größer als das vorgesehene Spurraster ist, in der relativen Lage einer Datenoberfläche zur Servooberfläche auftritt. Eine hierzu geeignete Realisierungsmöglichkeit ist in der Aufsicht der Figur 3 angedeutet: Die Justierspur 38 benötigt keine Aufteilung in Sektoren, wie dies üblicherweise für die Datenoberflächen sonst vorgenommen wird. Es ist jedoch zweckmäßig, einen radialen Datenstrahl 39 zu schreiben, der im Bereich der Datenspuren z.B. den Anfang eines beliebigen Sektors 40 markiert und im Bereich der Justierspur 38 ein Signal erzeugt, das man zur phasenge rechten Abspeicherung der Spurkorrektursignale verwenden kann. Am Anfang des durch den Sektor 40 festgelegten Abschnittes 38a der Justierspur 38 kann dann eine Erkennungsadresse 41 geschrieben sein.

Eine weitere Möglichkeit zum Auffinden der Justierspur ist die Verwendung einer Justierspurfrequenz, die außerhalb des Datenfrequenzbandes liegt.

Wegen verhältnismäßig kurzer Positionierzeiten werden bevorzugt Drehpositionierer eingesetzt, wie z.B. gemäß den Figuren 1 und 2 vorausgesetzt wurde. Für diesen Typ von Positionierern werden die Verbindungsglieder 33 der Positionierarme 23 bis 27 jeweils zu einem gelenkartigen Teil ausgestaltet, das ein seitliches Auslenken des jeweiligen Datenkopfes 11 bis 19 gestattet. Die Gelenkfunktion wird dabei durch Verwendung piezoelektrischer Elemente (Piezo-Aktuatoren) erreicht. Vier entsprechende Ausführungsformen solcher gelenkartiger Verbindungsglieder sind in den Figuren 4 bis 7 jeweils in Aufsicht angedeutet.

Nach Figur 4 ist das vordere Armstück 34 des Positionierarmes 27 über ein seitlich angebrachtes Verbindungsblech 44 an einem rückwärtigen Teilstück 45 des Armes befestigt. Das Teilstück 45 ist dabei starr mit der Welle 29 verbunden (vgl. Figur 1). Das Verbindungsblech 44 überbrückt einen Zwischenraum 46 zwischen den Teilen 34 und 45 des Armes 27 und läßt aufgrund entsprechender Biegeeigenschaften die geforderte Gelenkfunktion zu. Beispielsweise im Bereich der Mittelachse 27 ist zwischen den Teilen 34 und 45 ein piezoelektrisches Biegeelement 47 angebracht. Dieses Element ist ähnlich einem Bi-Metall-Streifen zungen- oder plättchenförmig aufgebaut und nimmt bei Anlegen einer elektrischen Spannung eine gekrümmte Gestalt an. Wie aus Figur 4 ferner hervorgeht, kann gegebenenfalls das rückwärtige Armstück 45 zusätzlich zu dem gelenkartigen Verbindungsglied 33a aus Verbindungsblech 44 und Piezobiegeelement 47 noch mit einem Dehnungselement 50 versehen sein. Mit diesem Element 50 ist eine Längenänderung des Armstückes 45 und damit des gesamten Positionierarmes 27 in Längsrichtung zu bewirken. Ein derartiges Dehnungselement kann dann erforderlich werden, falls bei der Auslenkung eines Magnetkopfes mit Hilfe des gelenkartigen Verbindungsgliedes 33a eine nicht mehr tolerierbare Verkantung des Magnetkopfes bezüglich einer Datenspur bewirkt wird. Das Dehnungselement 50 kann insbesondere ebenfalls aus einem oder mehreren piezoelektrischen Plättchen aufgebaut sein, an die synchron mit dem Piezobiegeelement 47 eine elektrische Spannung angelegt wird. Entsprechende Längenänderungselemente können deshalbauch als "Piezo-Translatoren" bezeichnet werden.

Abweichend von der in Figur 4 dargestellten Ausführungsform des gelenkartigen Verbindungsgliedes 33a kann nach Figur 5 ein gelenkartiges Verbindungsglied 33b auch mit Hilfe eines piezoelektrischen Dehnungselementes 50 ausgebildet werden. Dieses Dehnungselement befindet sich zwischen den Schenkeln 51a und 51b eines etwa V-förmigen Verbindungsbleches 51, das mit seiner Spitze seitlich aus dem zwischen den Teilen 34 und 45 des Positionierarmes 27 gebildeten Zwischenraum 46 herausragt. Mit einer Längenänderung des ebenfalls als Piezo-Translator ausgeführten Dehnungselementes 50 in Längsrichtung des Armes 27 wird somit eine entsprechende Änderung des Öffnungswinkels zwischen den beiden Schenkeln 51a und 51b und damit die angestrebte Gelenkfunktion bewirkt.

Gemäß Figur 6 ist ein gelenkartiges Verbindungsglied 33c mit einem etwa U-förmigen Verbindungsblech 53 gebildet. Zwischen den seitlich aus dem Zwischenraum 46 herausragenden Enden seiner Schenkel 53a und 53b befindet sich ein als Piezo-Translator gestaltetes Dehnungselement 50.

Ein in Figur 7 dargestelltes gelenkartiges Verbindungsglied 33d unterscheidet sich von dem Verbindungsglied 33a nach Figur 4 lediglich dadurch, daß statt des mittig angebrachten Piezo-Biegeelementes 47 an der dem Verbindungsblech 44 gegenüberliegenden Längsseite des Positionierarmes 27 ein als piezoelektrischer Längsschwinger gestaltetes Element 55 den Zwischenraum 46 überbrückt.

Gemäß den in den Figuren dargestellten Ausführungsformen einer Positioniervorrichtung wurde davon ausgegangen, daß diese einen Drehpositionierer enthält. Für eine Datenspeichereinrichtung gemäß der Erfindung ist jedoch ebensogut auch ein Linearpositionierer einsetzbar, wie er beispielsweise in dem Buch von H.Kaufmann: "Daten-Speicher", Wien 1973, Seiten 265 bis 271 oder in dem eingangs genannten Buch von W.Söll und J.H.Kirchner angedeutet ist. In diesem Falle brauchen die einstellbaren Verbindungsglieder keine Gelenkfunktion zu ermöglichen; sondern es ist nur eine Korrektur in Längsrichtung (Linearrichtung) des jeweiligen Positionierarmes erforderlich. Aus diesem Grunde können hierzu insbesondere die in den Figuren 4 bis 7 angedeuteten Längenänderungselemente 50 (Piezo-Translatoren) eingesetzt werden.

**Ansprüche**

1. Datenspeichereinrichtung mit
- mindestens einer magnetisierbaren Speicherplatte mit Datenspuren,
- einer mit der Speicherplatte starr verbundenen Servoplatte mit den Datenspuren zugeordneten Servospuren und
- einer Positioniervorrichtung mit einer Positionierelektronik zur Führung eines an einem Positionierarm befestigten Servokopfes längs der Servospuren und mindestens eines an einem Positionierarm befestigten Schreib-/Lese-Magnetkopfes längs der Datenspuren in Abhängigkeit von den jeweils zugeordneten Servospuren,
**dadurch gekennzeichnet,**
- daß mindestens eine zusätzliche Justierspur (38) in die Speicherplatte (6 bis 9) eingeschrieben ist,
- daß ein den Schreib-/Lese-Magnetkopf (11 bis 19) tragendes vorderes Armstück (34) des entsprechenden Positionierarmes (27) an einem einstellbaren Verbindungsglied (33; 33a bis 33d) befestigt ist, mittels dessen der Magnetkopf aus seiner durch eine zugeordnete Servospur festgelegten Sollage auslenkbar ist, und
- daß die Positionierelektronik (31) mit einer Nachführelektronik (36) versehen ist, welche die Einstellung des Verbindungsgliedes (33; 33a bis 33d) in Abhängigkeit von der detektierten und abgespeicherten relativen Lage der Justierspur (38) auf der Speicherplatte (6 bis 9) zu einer entsprechenden Servospur auf der Servoplatte (5) bei Führung des Magnetkopfes (11 bis 19) längs einer Datenspur steuert.

2. Einrichtung nach Anspruch 1, **dadurch gekennzeichnet,** daß die Positionierarme (22 bis 27) mittels einer Positioniervorrichtung (20) um eine gemeinsame Achse (D) drehbar sind und daß das einstellbare Verbindungsglied (33, 33a bis 33d) gelenkartig ausgestaltet ist.

3. Einrichtung nach Anspruch 1, **dadurch gekennzeichnet,** daß die Positionierarme mittels der Positioniervorrichtung in Längsrichtung (a) der Arme beweglich sind und daß das einstellbare Verbindungsglied als Längenänderungselement (50) ausgestaltet ist.

4. Einrichtung nach einem der Ansprüche 1 bis 3, **dadurch gekennzeichnet,** daß das einstellbare Verbindungsglied (33, 33a bis 33d) mindestens ein piezoelektrisches Element enthält, das mittels der Nachführelektronik (36) angesteuert wird.

5. Einrichtung nach einem der Ansprüche 1 bis 4, **dadurch gekennzeichnet,** daß in den den Schreib-/Lese-Magnetkopf (11 bis 19) tragenden Positionierarm (23 bis 27) ein in Längsrichtung (a) des Armes wirkendes Längenänderungselement (50) integriert ist.

6. Einrichtung nach Anspruch 5, **dadurch gekennzeichnet,** daß das Längenänderungselement (50) mindestens ein piezo-elektrisches Element enthält, das mittels der Nachführelektronik (36) angesteuert wird.

7. Einrichtung nach einem der Ansprüche 1 bis 6, **dadurch gekennzeichnet,** daß die Justierspur (38) als Doppelspur mit entgegengesetzt gerichteter Magnetisierung ausgeführt ist.

8. Verfahren zum Betrieb der Datenspeichereinrichtung nach einem der Ansprüche 1 bis 7, **dadurch gekenn zeichnet,** daß zunächst der Servokopf (10) längs einer der Justierspur (38) zugeordneten Referenzspur geführt wird und der Schreib-/Lese-Magnetkopf (11 bis 19) unter Ansteuerung des einstellbaren Verbindungsgliedes (33, 33a bis 33d) der Justierspur (38) nachgeführt wird, wobei mit der Nachführelektronik (36) ein Nachführsignal erzeugt und abgespeichert wird, und daß dieses abgespeicherte Nachführsignal später beim Schreiben oder Lesen einer Datenspur zur Ansteuerung des Verbindungsgliedes (33, 33a bis 33d) vorgesehen wird.

9. Verfahren nach Anspruch 8, **dadurch gekennzeichnet,** daß das Nachführsignal in Zeitabschnitten ohne Zugriff auf die Datenspuren erzeugt wird.

88 P 3272

FIG 1

FIG 2

88 P 3272

FIG 3

FIG 4

FIG 5

FIG 6

FIG 7